# EUROPEAN PATENT APPLICATION

(11) **EP 4 202 147 A1**
(43) Date of publication of application: **28.06.2023**
(21) Application number: 21217637.4
(22) Date of filing: 23.12.2021
(51) Int. Cl.: E04C 5/16, F16B 1/00

(54) **COUPLER, COUPLING SYSTEM AND METHOD**

(71) Applicant: HILTI Aktiengesellschaft, 9494 Schaan (LI)
(72) Inventor: Schwertner, Wolfram, 9470 Werdenberg (CH); Hasler, Claudio, 9488 Schellenberg (LI); Heiss, Marco, 6800 Feldkirch (AT)
(74) Representative: Hilti Aktiengesellschaft Corporate Intellectual Property

(57) **Abstract**

A method of coupling an elongated element (210) having an end portion to a sleeve (110) having a wall enclosing a receptacle, comprising providing the elongated element and the sleeve, wherein the sleeve or a package of the sleeve has a first data storage storing (115) a set of sleeve parameters, the method further comprising reading the set of sleeve parameters from the first data storage, inserting the end portion of the elongated element into the receptacle of the sleeve, and fastening the sleeve to the elongated element according to the set of sleeve parameters.

## Description

### TECHNICAL FIELD

Described herein is a method of coupling an elongated element having an end portion to a sleeve having a wall enclosing a receptacle, a coupling device and associated parts thereof. The method may include material deformation in order to achieve coupling.

### BACKGROUND ART

In many applications, there is the need to join to, or couple with, elements. One such application is reinforced concrete where reinforcing bars that are placed into the concrete are typically supplied in discrete lengths. There are many locations where the reinforcing bar must continue for a length longer than the discrete length supplied, and it becomes necessary to join multiple lengths together. One means of achieving this is to use a coupling device to join the bars together in an axial means.

The above application and discussion below refer to reinforcing bars in concrete as a potential application for a coupling method, however, it should be appreciated that many other applications require coupling of elements in an axial manner, such as steel light columns, scaffolding elements, pipes, cables, and so on and reference to reinforcing bars should not be seen as limiting.

One constraint with coupling system design relates to axial stress. Once fabricated, the reinforced concrete may be subjected to some applied loading which will place the coupled reinforcing bar into a state of axial stress. For example, under loading imposed by a large earthquake, a concrete element may become cracked and deformed. This may require the coupled reinforcing bar to stretch to a high level of plastic strain. The coupling device will then be required to have sufficient capacity to resist the full range of likely stresses and strains that may be imparted when in use.

A further design constraint is to avoid weakening the coupled elements about the coupling region. Ideally, the coupling device should have sufficient strength so as to force any region of failure away from the coupling region. This is of particular importance in certain applications, such as reinforced concrete elements used in earthquake prone regions where the reinforcing bar can be subjected to high levels of induced plastic stress and associated strain.

Another constraint with workpiece support relates to dimensional size. If reinforcing bars of different supplies are used, it may be an object to accommodate bars of different diameters within the same coupling device. It should also be appreciated that there are applications when the workpieces have different cross-sectional area, different shape, or different grades of material.

Offering an alternative design that addresses some or all of the above constraints or at least offers the public a choice may be useful. Further aspects and advantages of the coupling method, coupling device and associated parts thereof will become apparent from the ensuing description that is given by way of example only.

### SUMMARY

According to an aspect of the present disclosure, the above constraints are addressed by a coupler for coupling to an end portion of an elongated element, comprising a sleeve having a wall enclosing a receptacle and defining a sleeve axis, wherein the wall comprises an inner face facing the receptacle and a plurality of alternating first and second load-transmission sections, wherein the wall has a plurality of radial openings each defining a first load-transmission section, the coupler further comprising a plurality of load-transmission elements each configured to be inserted in one of the plurality of radial openings, wherein each of the plurality of first load-transmission sections comprises a support element opposite to the radial opening and projecting from the inner face into the receptacle above the inner face in the second load-transmission sections. In particular, the support elements' projecting above the inner face in the second load-transmission sections provides for a distance between the elongated element and the inner face. In this way, a uninterrupted circumferential gap between the elongate element and the inner face is provided in the second load-transmission sections. A grout filled in the receptacle may distribute around the elongate element more evenly, thus enhancing the coupling quality or force of the system.

In a preferred embodiment, each of the plurality of radial openings comprises a thread and each of the plurality of load-transmission elements comprises a screw. In another preferred embodiment, each of the plurality of load-transmission elements has a tip configured to cut into the longitudinal element. In this way, a form-locking load transmission between the load-transmission elements and the elongate element is increased.

In another preferred embodiment, each of the support elements comprises at least one bulge, or convex bulge, of the wall. A bulge may be easily produced, e.g. by embossing from an outer face of the wall, and does not need to be inserted through an opening of the sleeve.

In another preferred embodiment, the plurality of second load-transmission sections comprises a plurality of load-transmission projections, wherein the support elements project from the inner face into the receptacle above the load-transmission projections. The load-transmission projections may provide an undercut in an axial direction of the sleeve, thus increasing a form-locking load transmission between the wall and a grout filled in the receptacle.

In another preferred embodiment, at least one of the elongated element, the sleeve and the plurality of load-transmission elements comprises a metallic material, or an alloy, or steel. In another preferred embodiment, wherein the elongated element comprises a reinforcement bar and the coupler comprises a reinforcement-bar coupler.

According to another aspect, a coupling system comprises the coupler and a grout configured to be filled into the receptacle. According to another aspect, a coupling system comprises the coupler according to any of the preceding claims and two reinforcement bars each having an end portion, wherein the receptacle receives the end portions of the reinforcement bars from opposite axial directions.

According to another aspect, a method of coupling an elongated element having an end portion to a sleeve having a wall enclosing a receptacle, comprises providing the elongated element and the sleeve, wherein the sleeve or a package of the sleeve has a first data storage storing a set of sleeve parameters, the method further comprising reading the set of sleeve parameters from the first data storage, inserting the end portion of the elongated element into the receptacle of the sleeve, and fastening the sleeve to the elongated element according to the set of sleeve parameters. In particular, fastening the sleeve to the elongated element according to the set of sleeve parameters ensures reduces the risk of erroneously incorrectly fastening the sleeve to the elongated element. A fastening tool may automatically apply the correct parameters to the fastening process, thus further ensuring correct fastening.

In a preferred embodiment, the set of sleeve parameters includes at least one of a type of the sleeve, a size of the sleeve, a number and kind of load-transmission elements to be used, a load to be applied to a load-transmission element, and an amount and kind of a grout to be used.

In another preferred embodiment, fastening the sleeve to the elongated element comprises driving a load-transmission element through the wall of the sleeve on the elongated element. More preferred, the load-transmission element comprises at least one of a stud, a nail and a screw. The load-transmission element may be driven by at least one of a nail gun, a stud gun, a hydraulic press and a screw driver.

In another preferred embodiment, fastening the sleeve to the elongated element comprises filling the receptacle with a grout. More preferred, the grout comprises at least one of a mortar, a resin and a glue. Likewise preferred, the grout is provided in a container which has a second data storage storing a set of grout parameters, and the method further comprises reading the set of grout parameters from the second data storage. Even more preferred, the set of grout parameters includes at least one of a type, a production lot, a production date and a composition, of the grout.

In another preferred embodiment, the method further comprises determining a set of coupling parameters of the method performed and transmitting the set of coupling parameters to a database. More preferred, the set of coupling parameters includes at least one of a type of the sleeve, a size of the sleeve, a type of the load-transmission element, a size of the load-transmission, a load applied to the load-transmission element, a type of the grout, a composition of the grout, a production lot of the grout, a composition of the grout, an amount of the grout filled in the receptacle. Likewise preferred, the method further comprises using the set of coupling parameters to verify correct coupling of the elongated element.

According to another aspect, a coupling system comprises an elongated element, a sleeve, wherein the sleeve or a package of the sleeve has a first data storage storing a set of sleeve parameters, the coupling system further comprising a reader configured to read the set of sleeve parameters from the first data storage.

In a preferred embodiment, the coupling system further comprises a load-transmission element configured to be driven through the wall of the sleeve according to the set of sleeve parameters. In another preferred embodiment, the coupling system further comprises a grout configured to be filled in the receptacle according to the set of sleeve parameters.

### BRIEF DESCRIPTION OF THE DRAWINGS

Further aspects and advantages of the fastening tool, associated parts and a method of use thereof will become apparent from the ensuing description that is given by way of example only and with reference to the accompanying drawings in which:
- Fig. 1: illustrates a side view of a coupler,
- Fig. 2: illustrates the coupler of Fig. 1 in a cross-sectional side-view,
- Fig. 3: illustrates a coupling system in a cross-sectional front-view,
- Fig. 4: illlustrates the coupling system of Fig. 3 in a cross-sectional front-view,
- Fig. 5: illustrates a coupling system in a cross-sectional front-view, and
- Fig. 6: illustrates a coupling system in a cross-sectional side-view.

### DETAILED DESCRIPTION

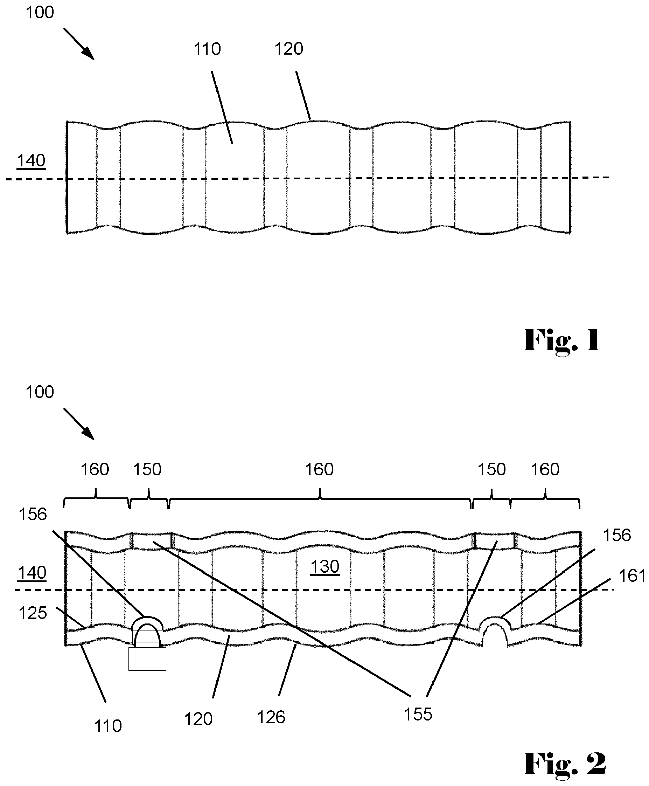

In Figs. 1 and 2, a coupler 100 provided to be coupled to an end portion of an elongated element such as a reinforcement bar is shown. The coupler 100 comprises a sleeve 110 having a wall 120 that encloses a receptacle 130 and that defines a sleeve axis 140. The wall 120 comprises an inner face 125 facing the receptacle 130 and comprises a plurality of alternating first load-transmission sections 150 and second load-transmission sections 160. The wall 120 is provided with two radial openings 155 each defining a first load-transmission section 150. Each of the plurality of first load-transmission sections 150 comprises a support element 156 opposite to the respective radial opening 155 and projecting from the inner face 125 into the receptacle 130 above the inner face 125 in the second load-transmission sections 160. Each support element 156 is formed as a bulge embossed from an outer face126 of the wall 120. Each of the second load-transmission sections 160 comprises one or more load-transmission projections 161. However, the support elements 156 project from the inner face 125 into the receptacle 130 above the load-transmission projections 161.

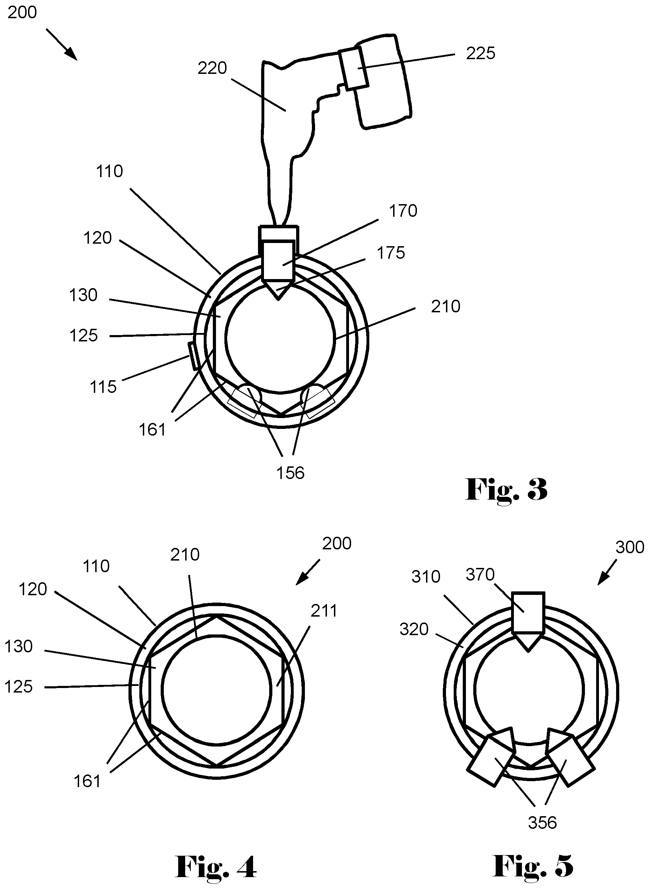

In Figs. 3 and 4, a coupling system 200 comprising a longitudinal element 210 such as a reinforcement bar and the coupler 100 of Figs. 1-2 is shown in a cross-sectional front-view sectioned at a level of a first load-transmission section (Fig. 3) and at a level of a second load-transmission section (Fig. 4), respectively. The coupling system 200 further comprises a plurality of load-transmission elements 170 inserted in the plurality of radial openings. Each radial opening is provided with a thread and each load-transmission element 170 is formed as a screw having a counter-thread and is screwed into a respective radial opening by an electric screw driver 220. Each load-transmission element 170 has a tip 175 that cuts into the longitudinal element 210 for a form-locking load transmission in an axial direction. The elongated element 210, the sleeve 110 and the plurality of load-transmission elements 170 are made of steel.

As shown in Fig. 3, the support elements 156 project above the load-transmission projections 161 projecting from the inner face 125 in the second load-transmission sections. As shown in Fig. 4, a distance between the elongated element 210 and the inner face 125 is thus provided in the second load-transmission sections. In this way, an uninterrupted circumferential gap 211 between the elongate element 210 and the inner face 125 is provided in the second load-transmission section.

The sleeve 110 has a first data storage 115 formed as a RFID tag, a one- or two-dimensional bar code, a color code or the like, and storing a set of sleeve parameters. The set of sleeve parameters include a type of the sleeve 110, a size of the sleeve 110, a number and kind of load-transmission elements 170 to be used, a load such as a torque to be applied to a load-transmission element 170, and an amount and kind of a grout to be used in the receptacle 130, if applicable. The electric screw driver 220 comprises a reader 225 configured to read the set of sleeve parameters from the first data storage 115. The screw driver 220 automatically applies a load, e.g. a torque to the load-transmission element 170 according to the set of sleeve parameters read from the first data storage 115.

The reader 225 may further be configured to read a set of grout parameters such as a type, a production lot, a production date and a composition, of a grout that is intended to be filled in the receptacle 230. The set of grout parameters may be read from a second data storage provided on a container of the grout.

Furthermore, the reader 225 may determine a set of coupling parameters of the coupling method performed, such as a type of the sleeve, a size of the sleeve, a type of the load-transmission element, a size of the load-transmission, a load applied to the load-transmission element, a type of the grout, a composition of the grout, a production lot of the grout, a composition of the grout, and an amount of the grout filled in the receptacle. The reader 225 may then, e.g. during battery charging via a battery charging device, transmit the set of coupling parameters to an external database where some or all of the set of coupling parameters may be used to verify correct coupling of the elongated element 210. A third data storage, e.g. a one- or two-dimensional bar code, may be provided on a sealing element (not shown) that is visible only after filling the sleeve with a sufficient amount of grout. Such a third data storage may contain data confirming filling the sleeve with the right amount of grout. Such confirmation data may be contained in the set of coupling parameters.

In Fig. 5, an alternative embodiment of a coupling system 300 is shown. Like the coupling system 200 shown in Figs. 3 and 4, the coupling system comprises a sleeve 310 having a wall 320, a load-transmission element 370 and a plurality of support elements 356. The support elements 356 are formed as screws driven through the wall 320.

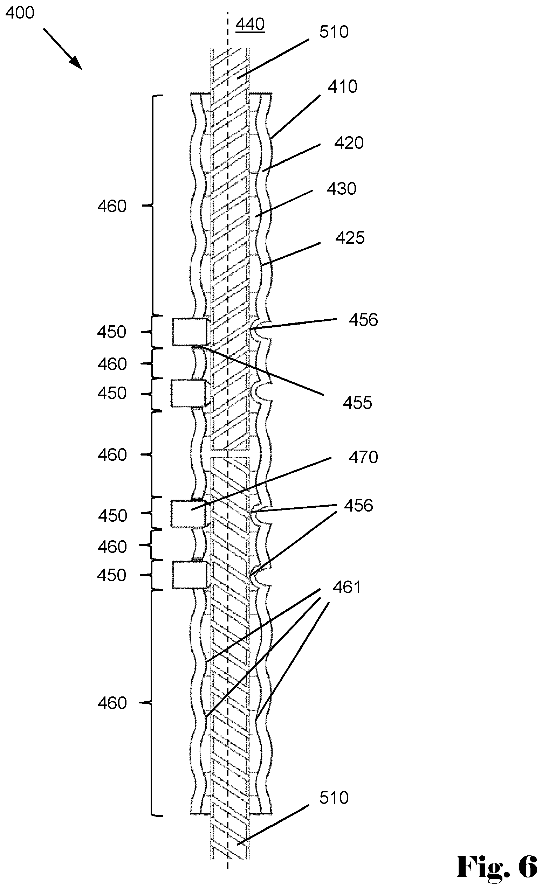

In Fig. 6, a coupling system 400 is shown. The coupling system 400 comprises a coupler having a sleeve 410 and coupled to an end portion of each of two reinforcement bars 510.

The sleeve 410 has a wall 420 that encloses a receptacle 430 filled with a grout such as an epoxy resin and that defines a sleeve axis 440. The wall 420 comprises an inner face 425 facing the receptacle 430 and comprises a plurality of alternating first load-transmission sections 450 and second load-transmission sections 460. The wall 420 is provided with two radial openings 455 each defining a first load-transmission section 450. Each of the plurality of first load-transmission sections 450 comprises a support element 456 opposite to the respective radial opening 455 and projecting from the inner face 425 into the receptacle 430 above the inner face 425 in the second load-transmission sections 460.

Each of the second load-transmission sections 460 comprises one or more load-transmission projections 461 providing an undercut in an axial direction of the sleeve 410, thus creating a form-locking load transmission between the wall 420 and the grout in the receptacle 430. A load applied to any of the longitudinal elements 510 is thus transmitted to the to the other of the longitudinal elements 510 via both the load-transmission elements 470 and the load-transmission projections 461. The grout in the receptacle 430 is evenly distributed around the elongate element 510 within a gap between the elongate elements 510 and the inner face 425, particularly the load-transmission projections 461.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A method of coupling an elongated element having an end portion to a sleeve having a wall enclosing a receptacle, comprising providing the elongated element and the sleeve, wherein the sleeve or a package of the sleeve has a first data storage storing a set of sleeve parameters, the method further comprising reading the set of sleeve parameters from the first data storage, inserting the end portion of the elongated element into the receptacle of the sleeve, and fastening the sleeve to the elongated element according to the set of sleeve parameters.

2. The method according to claim 1, wherein the set of sleeve parameters includes at least one of a type of the sleeve, a size of the sleeve, a number and kind of load-transmission elements to be used, a load to be applied to a load-transmission element, and an amount and kind of a grout to be used.

3. The method according to any of the preceding claims, wherein fastening the sleeve to the elongated element comprises driving a load-transmission element through the wall of the sleeve on the elongated element.

4. The method according to claim 3, wherein the load-transmission element comprises at least one of a stud, a nail and a screw.

5. The method according to any of the preceding claims, wherein fastening the sleeve to the elongated element comprises filling the receptacle with a grout.

6. The method according to claim 5, wherein the grout comprises at least one of a mortar, a resin and a glue.

7. The method according to any of claims 5 and 6, wherein the grout is provided in a container which has a second data storage storing a set of grout parameters, the method further comprising reading the set of grout parameters from the second data storage.

8. The method according to the claim 7, wherein the set of grout parameters includes at least one of a type, a production lot, a production date and a composition, of the grout.

9. The method according to any of the preceding claims, further comprising determining a set of coupling parameters of the method performed and transmitting the set of coupling parameters to a database.

10. The method according to claim 9, wherein the set of coupling parameters includes at least one of a type of the sleeve, a size of the sleeve, a type of the load-transmission element, a size of the load-transmission, a load applied to the load-transmission element, a type of the grout, a composition of the grout, a production lot of the grout, a composition of the grout, an amount of the grout filled in the receptacle.

11. The method according to any of claims 9 and 10, further comprising using the set of coupling parameters to verify correct coupling of the elongated element.

12. The method according to any of the preceding claims, wherein the elongated element comprises a reinforcement bar and the sleeve comprises a reinforcement-bar coupler.

13. A coupling system, comprising an elongated element, a sleeve, wherein the sleeve or a package of the sleeve has a first data storage storing a set of sleeve parameters, the coupling system further comprising a reader configured to read the set of sleeve parameters from the first data storage.

14. The coupling system according to claim 13, further comprising a load-transmission element configured to be driven through the wall of the sleeve according to the set of sleeve parameters.

15. The coupling system according to any of claims 13 and 14, further comprising a grout configured to be filled in the receptacle according to the set of sleeve parameters.
